# EUROPEAN PATENT APPLICATION

(11) **EP 4 760 536 A1**
(43) Date of publication of application: **17.06.2026**
(21) Application number: 25216908.1
(22) Date of filing: 19.11.2025
(51) Int. Cl.: G06F 16/438, H04N 21/854

(54) **MEDIA CONTENT GENERATION METHOD, DEVICE, AND MEDIUM**

(30) Priority: 13.12.2024 CN 202411847450
(71) Applicant: Beijing Zitiao Network Technology Co., Ltd., Beijing 100190 (CN)
(72) Inventor: ZHOU, Yuecheng, Beijing, 100028 (CN)
(74) Representative: Marks & Clerk LLP

(57) **Abstract**

Embodiments of the present disclosure provide a media content generation method, a device, and a medium. The method includes: displaying a material import control and a generation control on a first page; displaying a second page in response to an interactive operation on the material import control, the second page including a candidate material; determining a target material in response to a selection operation on the candidate material, and displaying the target material on the first page, where the target material includes at least one of a target picture set and a target video; and generating a target audio according to the target material in response to an interactive operation on the generation control, and generating target media content according to the target audio and the target material.

## Description

### CROSS-REFERENCE TO RELATED APPLICATION

This application claims the priority to and benefits of the Chinese Patent Application, No. 202411847450.4, which was filed on December 13, 2024. The aforementioned patent application is hereby incorporated by reference in its entirety.

### TECHNICAL FIELD

Embodiments of the present disclosure relate to computer technologies, and in particular, to a media content generation method, an apparatus, a device, a medium, and a program product.

### BACKGROUND

With a popularization of computer technologies in the field of content creation, content creation clients that generate media content based on prompt texts are more and more widely used. For example, the content creation client includes a music creation client, etc.

At present, music may be generated by inputting text and music style into the music creation client. However, this music generation method requires users to understand various music styles and be able to accurately describe their expectations for music, which requires users to have a high level of musical literacy and has a high creation threshold.

### SUMMARY

Embodiments of the present disclosure provide a media content generation method, an apparatus, a device, a medium, and a program product, which may optimize a media content generation solution and reduce the difficulty of media content creation.

In a first aspect, an embodiment of the present disclosure provides a media content generation method, including:
displaying a material import control and a generation control on a first page;
displaying a second page in response to an interactive operation on the material import control, the second page including a candidate material;
determining a target material in response to a selection operation on the candidate material, and displaying the target material on the first page; and
generating a target audio according to the target material in response to an interactive operation on the generation control, and generating target media content according to the target audio and the target material.

In a second aspect, an embodiment of the present disclosure further provides a media content generation apparatus, the apparatus including:
a first page display module, configured to display a material import control and a generation control on a first page;
a second page display module, configured to display a second page in response to an interactive operation on the material import control, the second page including a candidate material;
a material display module, configured to determine a target material in response to a selection operation on the candidate material, and display the target material on the first page; and
a media content generation module, configured to generate a target audio according to the target material in response to an interactive operation on the generation control, and generate target media content according to the target audio and the target material.

In a third aspect, an embodiment of the present disclosure further provides an electronic device, the electronic device including:
one or more processors; and
a storage apparatus, configured to store one or more programs,
when the one or more programs are executed by the one or more processors, the one or more processors are caused to implement the media content generation method according to any embodiment of the present disclosure.

In a fourth aspect, an embodiment of the present disclosure further provides a storage medium including computer executable instructions, where the computer executable instructions are used to perform the media content generation method according to any embodiment of the present disclosure when being executed by a computer processor.

In a fifth aspect, an embodiment of the present disclosure further provides a computer program product, including a computer program, where the computer program implements the media content generation method according to any embodiment of the present disclosure when being executed by a processor.

### BRIEF DESCRIPTION OF DRAWINGS

The above and other features, advantages, and aspects of the embodiments of the present disclosure will become more apparent in combination with the drawings and with reference to the following specific embodiments. Throughout the drawings, the same or similar reference numbers refer to the same or similar elements. It should be understood that the drawings are schematic and that the components and elements are not necessarily drawn to scale.
Fig. 1 is a schematic flowchart of a media content generation method provided by an embodiment of the present disclosure;
Fig. 2 is a schematic diagram of a first page provided by an embodiment of the present disclosure;
Fig. 3 is a schematic diagram of a second page provided by an embodiment of the present disclosure;
Fig. 4 is a schematic diagram of another second page provided by an embodiment of the present disclosure;
Fig. 5a is a flowchart of an audio generation method provided by an embodiment of the present disclosure;
Fig. 5b is a flowchart of another audio generation method provided by an embodiment of the present disclosure;
Fig. 6 is a schematic flowchart of another media content generation method provided by an embodiment of the present disclosure;
Fig. 7 is a flowchart of a preview method provided by an embodiment of the present disclosure;
Fig. 8 is a schematic diagram of a display manner of a preview window provided by an embodiment of the present disclosure;
Fig. 9 is a schematic structural diagram of a media content generation apparatus provided by an embodiment of the present disclosure; and
Fig. 10 is a schematic structural diagram of an electronic device provided by an embodiment of the present disclosure.

### DETAILED DESCRIPTION

Embodiments of the present disclosure will be described in more detail below with reference to the drawings. Although certain embodiments of the present disclosure are shown in the drawings, it should be understood that the present disclosure may be implemented in various forms, and should not be interpreted as limited to the embodiments set forth herein; on the contrary, these embodiments are provided for a more thorough and complete understanding of the present disclosure. It should be understood that the drawings and embodiments of the present disclosure are only for exemplary purposes, and are not intended to limit the protection scope of the present disclosure.

It should be understood that steps described in method implementations of the present disclosure may be performed in different orders and/or in parallel. In addition, the method implementations may include additional steps and/or omit the execution of the illustrated steps. The scope of the present disclosure is not limited in this regard.

As used herein, the term "include" and its variants are open-ended inclusions, that is, "include/comprise but not limited to". The term "based on" means "based at least in part on". The term "one embodiment" means "at least one embodiment"; the term "another embodiment" means "at least one other embodiment"; the term "some embodiments" means "at least some embodiments". Relevant definitions of other terms will be given in the following description.

It should be noted that concepts such as "first" and "second" mentioned in the present disclosure are only used to distinguish different apparatuses, modules or units, and are not used to limit the order of functions performed by these apparatuses, modules or units or interdependence therebetween.

It should be noted that the modifiers of "one" and "a plurality of" mentioned in the present disclosure are illustrative and not restrictive, and those skilled in the art should understand that unless otherwise clearly indicated in the context, they should be understood as "one or more".

The names of messages or information exchanged between a plurality of apparatuses in the implementations of the present disclosure are only for illustrative purposes and are not intended to limit the scope of these messages or information.

It may be understood that before using the technical solutions disclosed in the embodiments of the present disclosure, the user should be informed of the type, use range, use scenario, etc. of personal information involved in the present disclosure in an appropriate manner in accordance with relevant laws and regulations, and the authorization of the user should be obtained.

For example, in response to receiving an active request from a user, prompt information is sent to the user to clearly prompt the user that the requested operation will require access to and use of the user's personal information. In this way, the user may independently choose whether to provide personal information to software or hardware such as an electronic device, an application, a server or a storage medium that perform operations of the technical solutions of the present disclosure according to the prompt information.

As an optional but non-limiting implementation, in response to receiving an active request from a user, the manner of sending prompt information to the user may be, for example, a pop-up window, and the prompt information may be presented in the pop-up window in text. In addition, the pop-up window may also carry a selection control for the user to select "agree" or "disagree" to provide personal information to the electronic device.

It may be understood that the above process of notifying and obtaining user authorization is only illustrative, and does not constitute a limitation on the implementations of the present disclosure, and other manners that meet relevant laws and regulations may also be applied to the implementations of the present disclosure.

It may be understood that the data involved in the technical solution (including but not limited to the data itself, acquisition or use of the data) should comply with requirements of corresponding laws, regulations and related provisions.

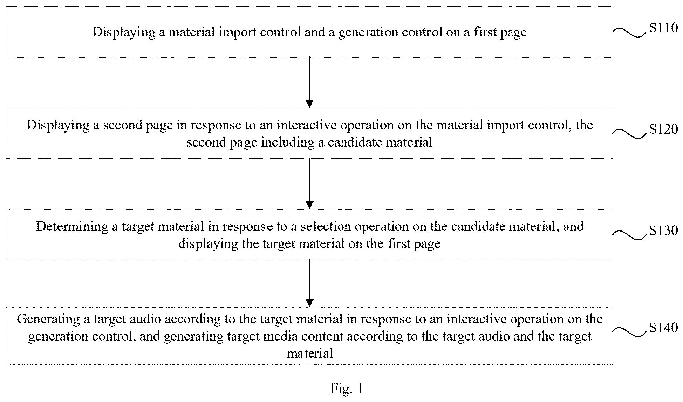

Fig. 1 is a schematic flowchart of a media content generation method provided by an embodiment of the present disclosure. The embodiment of the present disclosure is applicable to a situation of media content creation, for example, a song creation scenario. The method may be executed by a media content generation apparatus, and the apparatus may be implemented in forms of software and/or hardware, optionally, by an electronic device, where the electronic device may be a mobile terminal, a PC, a server, etc.

As shown in Fig. 1, the method includes:
S110, displaying a material import control and a generation control on a first page.

The first page represents an interactive page of a media content creation function. The media content may include a song and/or a song video, etc. For example, the first page includes a material import control and a generation control. Optionally, the first page further includes at least one of a text input control, a recommended text area, and a type option, etc. The material import control is used to trigger a material import event. The material import event represents an event of selecting a target material and importing the target material into the first page. The generation control is used to trigger a media content generation event. The media content generation event represents an event of generating media content based on the target material. The text input control is used to input a text description related to the media content. Accordingly, the media content is generated according to the text description and an image description corresponding to the target material. The recommended text area is used to display a recommended text. A selected recommended text is displayed at a position corresponding to the text input control in response to a selection operation on the recommended text. The type option is used to determine whether a generated media content includes lyrics. A model for generating the target audio may be determined according to option information corresponding to the type option, and a first audio with lyrics or a second audio without lyrics is generated according to a determined model.

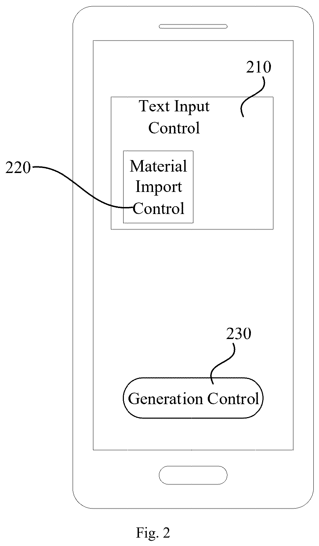

Fig. 2 is a schematic diagram of a first page provided by an embodiment of the present disclosure. As shown in Fig. 2, a material import control 220 is displayed at a position corresponding to a text input control 210 of a first page 200, and a generation control 230 is displayed below the text input control 210.

Optionally, the material import control may be displayed between the text input control and the generation control on the first page.

**In** an embodiment of the present disclosure, a creation control is displayed on a fourth page, and in response to an interactive operation on the creation control, the first page is displayed, where the first page includes the material import control, the generation control, etc.

Optionally, a version of the music creation client may be updated, so that the music creation client may generate media content based on the target material. At cold start after the version update for the first time, a target copywriting is displayed at a position corresponding to the creation control on the fourth page.

Optionally, if it is detected that a number of consecutive song switching times exceeds a preset number threshold, the target copywriting is displayed at the position corresponding to the creation control on the fourth page.

The target copywriting is used to prompt a newly added function of generating a song based on the target material. If a display duration of the target copywriting exceeds a preset duration threshold, the target copywriting is hidden. Alternatively, in response to an interactive operation on any position on the fourth page, the target copywriting is hidden.

S120, displaying a second page in response to an interactive operation on the material import control, the second page including a candidate material.

**In** an embodiment of the present disclosure, the second page may be a display page of a picture(s) and/or a video(s). The picture may include a taken photo and/or a downloaded picture. For example, the second page includes an album page. The second page may include an album page composed of a picture(s) and a video(s) acquired within a set time period. The second page includes a first tab page, a second tab page, and a third tab page. The first tab page includes a picture(s) and a video(s). The second tab page includes the picture(s). The third tab page includes the video(s).

Exemplarily, a second page is displayed in response to an interactive operation on the material import control, where the material selection page includes a candidate picture and/or a candidate video. Optionally, a candidate picture and/or a candidate video on the second page are updated in response to an interactive operation on a page switching control on the second page. The page switching control includes at least two candidate albums. The interactive operation on the page switching control may include an album switching operation.

In some embodiments, after the second page is displayed, the method further includes:

displaying an acquisition time of the candidate material on the second page in response to a slide operation on the second page; and sliding the candidate material corresponding to the acquisition time on the second page in response to a slide operation on the acquisition time.

The slide operation on the second page represents an up-down slide operation while pressing the candidate material on the second page. In response to the slide operation on the second page, the acquisition time of the pressed candidate material is displayed on the second page. If an up-down slide operation of pressing the acquisition time is detected on the second page, the candidate material is moved, according to the acquisition time, integrally along a direction corresponding to the up-down slide operation. For example, taking the acquisition time as a starting point, pictures and/or videos acquired on the same day are integrally moved up or down. By the integral movement of the candidate data material, the position of a plurality of rows of pictures and/or videos in the album page may be changed by one slide operation, thus improving the material sliding efficiency.

In still some embodiments, after the second page is displayed, the method further includes:
sliding the candidate material on the second page in response to the slide operation on the second page.

S130, determining a target material in response to a selection operation on the candidate material, and displaying the target material on the first page.

The target material represents a candidate material selected on the second page. The target material includes a target picture set and/or a target video. The target picture set includes a plurality of target pictures. If the candidate material is selected, the candidate material on the second page is switched to a selected state, and a thumbnail of the target material is displayed in a target window on the second page. The target window may be displayed at the bottom, middle, top or side of the second page.

Exemplarily, in response to the selection operation on the candidate material, the target material is displayed in the target window on the second page. In response to a confirmation operation on the target material, the first page is displayed, and the target material is displayed at a position corresponding to the material import control on the first page.

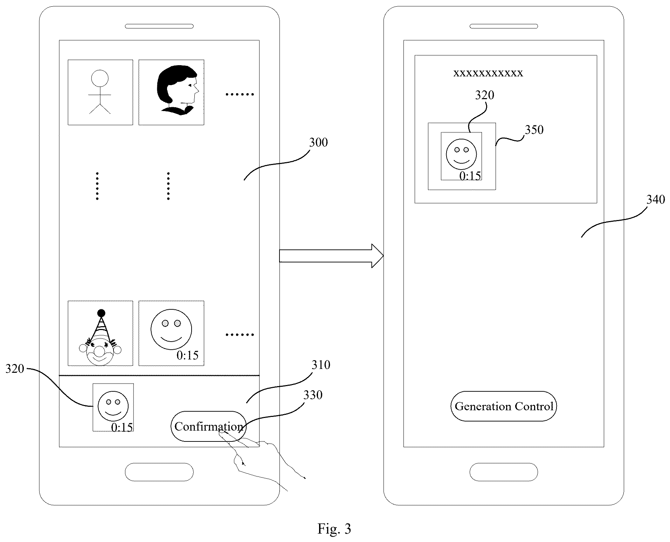

Fig. 3 is a schematic diagram of a second page provided by an embodiment of the present disclosure. As shown in Fig. 3, a target window 310 is displayed at the bottom of the second page 300. The target window 310 includes a reduced-size video cover picture 320 of a target video and a confirmation control 330. In response to an interactive operation on the confirmation control 330, a first page 340 is displayed. The reduced-size video cover picture 320 of the target video is displayed at a position corresponding to a material import control 350 on the first page 340.

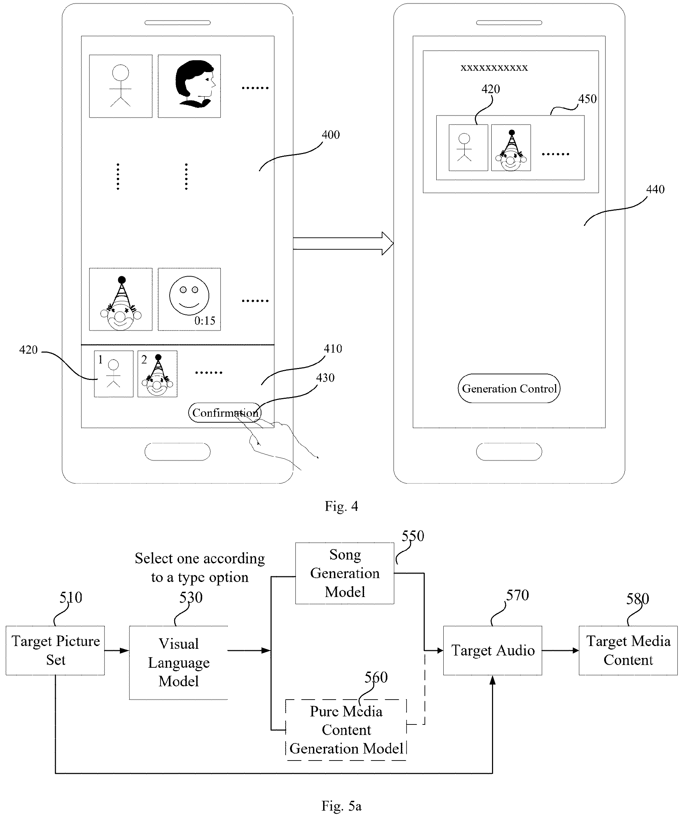

Fig. 4 is a schematic diagram of another second page provided by an embodiment of the present disclosure. As shown in Fig. 4, a target window 410 is displayed at the bottom of the second page 400. The target window 410 includes a thumbnail 420 of a target picture in a target picture set and a confirmation control 430. In response to an interactive operation on the confirmation control 430, a first page 440 is displayed. A thumbnail 420 of the target picture in the target picture set is displayed at a position corresponding to a material import control 450 on the first page 440.

In response to the selection operation on the candidate material, the target window is displayed at the bottom of the second page, where the target window includes the target material and a confirmation control. In response to an interactive operation on the confirmation control, the target material is displayed at the position corresponding to the material import control on the first page. In order to reduce the occupancy of the target window on the screen display space, a thumbnail of the target material may be displayed in the target window, which is convenient for previewing or editing the target material, so that the target material meets the expectation of media content generation. If the interactive operation on the confirmation control is detected, it indicates that the target material meets the expectation of media content generation, and the target material is displayed on the first page to intuitively display the material required for generating the song.

In some embodiments, after the target material is displayed in the target window on the second page in response to the selection operation on the candidate material, the method further includes:

displaying a material preview page in response to an interactive operation on the target video, the material preview page including a video frame sequence of the target video; determining a cropped target video in response to a crop operation on the video frame sequence; and displaying the cropped target video at the position corresponding to the material import control on the first page in response to a confirmation operation on the cropped target video. Cropping the target video by the material preview page may realize quick editing of song duration.

For example, the target video at the bottom of the second page is clicked to display the material preview page, the target video is played in the material preview page, and the video frame sequence of the target video is displayed at the bottom of the material preview page. A playing progress of the target video corresponds to a position of a timeline in the video frame sequence. Video editing duration is determined according to the position of the timeline. In response to an adjustment operation on the timeline, the video editing duration is determined according to the position of the timeline, and the target video is cropped according to the video editing duration to obtain the cropped target video. The bottom of the material preview page further includes a complete control and a cancel control. In response to an interactive operation on the complete control, the cropped target video is displayed at the position corresponding to the material import control on the first page. In response to an interactive operation on the cancel control, the crop operation on the target video is abandoned.

In some other embodiments, after the target material is displayed in the target window on the second page in response to the selection operation on the candidate material, the method further includes:

displaying a material preview page in response to an interactive operation on a target picture in the target picture set, the material preview page including the target picture set, where target pictures in the target picture set are sequentially arranged; updating the target picture set on the material preview page in response to an edit operation on the target picture set, the edit operation including at least one of picture shifting, picture deleting, and picture adding; and displaying the updated target picture set at the position corresponding to the material import control on the first page in response to a confirmation operation on the updated target picture set. After the target picture is selected, the target picture is previewed by the material preview page, which realizes intuitive display of the target picture. With the edit operation on the material preview page, the selected target picture may be shifted, deleted, or a new target picture may be added, without returning to the second page for operation, which simplifies the interaction process.

For example, the target picture at the bottom of the second page is clicked to display the material preview page. A preview picture of the target picture is displayed using the material preview page, and the target picture in the target picture set is displayed at the bottom of the material preview page. The preview picture represents a target picture whose picture size exceeds a set threshold. In response to a deletion operation on the target picture at the bottom of the material preview page, a corresponding target picture in the target picture set is deleted. In response to a shift operation on the target picture at the bottom of the material preview page, a position of the corresponding target picture in the target picture set is adjusted. In response to an add operation on the target picture set at the bottom of the material preview page, a new target picture is inserted into the target picture set. The bottom of the material preview page further includes a confirmation control. In response to an interactive operation on the confirmation control, the updated target picture set is displayed at the position corresponding to the material import control on the first page.

Optionally, the material selection page further includes a shooting control. In response to an interactive operation on the shooting control, a shooting page is displayed. In response to a shooting operation on the shooting page, the target material is acquired.

S140, generating a target audio according to the target material in response to an interactive operation on the generation control, and generating target media content according to the target audio and the target material.

The target audio is generated based on image description information corresponding to the target material. The target audio may be audio data including lyrics or audio data without lyrics. The target media content may represent a song video. The song video may include a video with soundtrack or a video with matching picture and audio rhythm.

Exemplarily, generating the target audio according to the target material in response to the interactive operation on the generation control, and generating the target media content according to the target audio and the target material includes:
in response to the interactive operation on the generation control, generating the target audio according to the target material and target prompt information, where the target prompt information includes prompt information associated with the media content generation. The target prompt information may be input by the user or may be preset.

In some embodiments, generating the target audio according to the target material and the target prompt information includes:
acquiring a target video frame in the target video, and determining image description information according to the target video frame; and generating the target audio according to the image description information and the target prompt information.

The target video frame is a part of video frames in the target video. The target video frame in the target video may be acquired by way of video frame extraction. The video frame extraction manner may be random frame extraction or frame extraction at a preset interval. The image description information of the target video frame may be generated by a visual language model. Performing video frame extraction processing on the target video to obtain the target video frame, and understanding the target video frame by the visual language model to obtain the image description information may reduce the occupancy of computing power. The image description information corresponding to the video frame may be text information obtained by semantically understanding image content of the video frame. Then, the image description information is input into the media content generation model as the prompt information, and the target audio is generated by the media content generation model according to the image description information and the target prompt information. A duration of the target audio is associated with a duration of the target video. For example, a deviation between the duration of the target audio and the duration of the target video is less than a set threshold. If the target prompt information includes song duration, the duration of the target audio is determined according to the song duration in the target prompt information.

Optionally, the image description information of the target picture in the target picture set may also be generated by the visual language model. Then, the target audio is generated by the media content generation model according to the image description information corresponding to the target picture and the target prompt information.

For example, in response to the interactive operation on the generation control, the image description information is generated according to the target picture in the target picture set, and the target audio is generated according to the image description information corresponding to the target picture. The image description information corresponding to the target picture may be text information obtained by semantically understanding image content of the target picture. The duration of the target audio is determined according to the song duration in the target prompt information.

In an embodiment of the present disclosure, generating the target media content according to the target audio and the target material includes: generating the target media content according to the target audio and image information of the target video, where the duration of the target audio is consistent with a duration of the target media content. If the target prompt information does not include the song duration, the duration of the target media content is associated with the duration of the target video. If the target prompt information includes the song duration, the duration of the target media content is determined according to the target prompt information.

By separating audio information and image information of the target video, and combining the image information and the target audio to form the target media content, the generated target audio may be used as the soundtrack of the target video.

Optionally, generating the target media content according to the target audio and the target material includes:
determining a correspondence between the target picture and the target audio according to beat information and downbeat information of the target audio; and generating the target media content according to the target audio, the target picture set, and the correspondence.

The correspondence between the target picture and the target audio includes a beat matching strategy for the target picture. For example, the beat matching strategy includes a correspondence between a beat of the target audio and the target picture. It is possible to change a target picture per N beats of the target audio and play pictures in a loop according to a picture sequence.

Optionally, the first page further includes a type option, and option information corresponding to the type option is determined in response to an interactive operation on the type option. The type option is used to select to generate an audio with lyrics or pure music. The option information of the type option represents a value of the type option. The option information is associated with the media content generation model. If the option information represents generating the audio with lyrics, a song generation model is used to generate the target audio. If the option information represents generating the pure music, a pure media content generation model is used to generate the target audio.

Generating the target audio according to the target material in response to the interactive operation on the generation control includes: in response to the interactive operation on the generation control, generating the target audio according to the target material and option information, the target audio including a first audio or a second audio, where the first audio includes lyrics, and the second audio does not include lyrics.

Fig. 5a is a flowchart of an audio generation method provided by an embodiment of the present disclosure. As shown in Fig. 5a, a target picture set 510 belongs to a pre-trained visual language model 530. Image description information is generated by the visual language model 530 based on a target picture in the target picture set 510. The image description information is input into a pre-trained song generation model 550 or a pure media content generation model 560, and a target audio 570 is generated by the song generation model 550 or the pure media content generation model 560 based on the image description information. A beat matching strategy for the target picture is determined according to beat information and downbeat information of the target audio, and target media content 580 is generated according to the target audio 570, the target picture set 510, and the beat matching strategy.

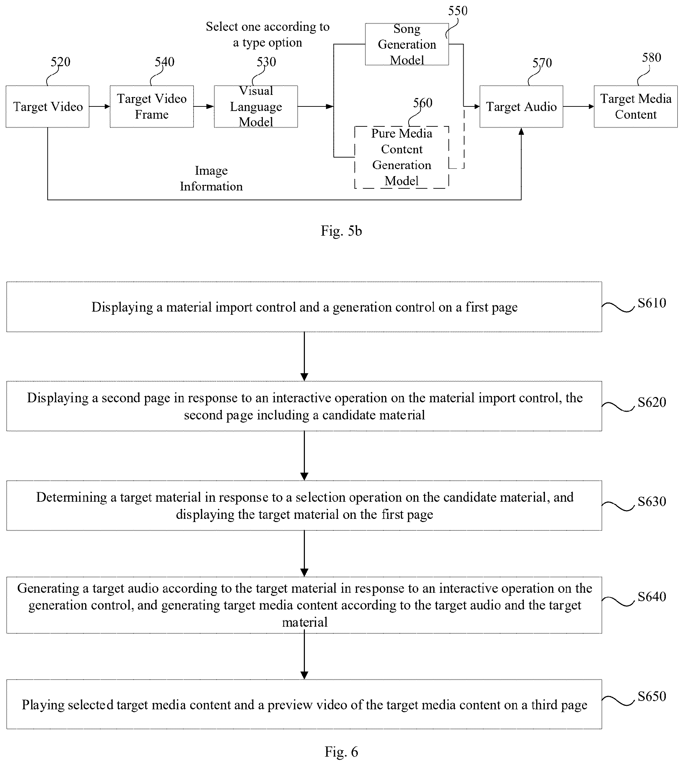

Fig. 5b is a flowchart of another audio generation method provided by an embodiment of the present disclosure. As shown in Fig. 5b, video frame extraction is performed on a target video 520 to obtain a target video frame 540, and the target video frame 540 is input into a pre-trained visual language model 530. Image description information is generated by the visual language model 530 based on the target video frame 540. The image description information is input into a pre-trained song generation model 550 or a pure media content generation model 560, and a target audio 570 is generated by the song generation model 550 or the pure media content generation model block 560 based on the image description information. Image information of the target video 520 is acquired, and target media content 580 is generated according to the image information and the target audio 570.

According to the technical solution of the embodiment of the present disclosure, a material import control and a generation control are displayed on a first page, and a second page is displayed in response to an interactive operation on the material import control, where the second page includes a candidate material. A target material is determined in response to a selection operation on the candidate material, and the target material is displayed on the first page, where the target material includes a target picture set and/or a target video. A target audio is generated according to the target material in response to an interactive operation on the generation control, and target media content is generated according to the target audio and the target material. According to the technical solution of the embodiment of the present disclosure, the target audio is generated by the target material, and the target media content is generated according to the target audio and the target material, so that the media content may be generated by the video or a plurality of pictures, which effectively enriches the interaction manners of media content creation and reduces the difficulty of media content creation.

Fig. 6 is a schematic flowchart of another media content generation method provided by an embodiment of the present disclosure. On the basis of the above embodiments, the embodiment of the present disclosure additionally defines a media content preview method.

As shown in Fig. 6, the method includes:
S610, displaying a material import control and a generation control on a first page;
S620, displaying a second page in response to an interactive operation on the material import control, the second page including a candidate material;
S630, determining a target material in response to a selection operation on the candidate material, and displaying the target material on the first page; and
S640, generating a target audio according to the target material in response to an interactive operation on the generation control, and generating target media content according to the target audio and the target material.

Exemplarily, if the interactive operation on the generation control on the first page is detected, the target material is input into a media content generation model, and a plurality of target audio are generated by the media content generation model according to the target material.

Alternatively, a text description related to the media content input in a text input control is acquired. If the interactive operation on the generation control on the first page is detected, the target material and the text description related to the media content are input into the media content generation model, and a plurality of target audio are generated by the media content generation model according to the target material and the text description related to the media content. A plurality of pieces of target media content are generated according to the plurality of target audio and the target material.

S650, playing selected target media content and a preview video of the target media content on a third page.

A playing progress of the preview video is associated with a playing progress of the target media content. The third page is used to preview the target media content. Song cover pictures corresponding to the plurality of pieces of target media content may be displayed in a set area on the third page. In response to a slide operation in the set area, positions of the song cover pictures are adjusted. For example, a left slide operation in the set area makes the plurality of pieces of target media content move left integrally. A right slide operation in the set area makes the plurality of pieces of target media content move right integrally.

It is possible to jump to the third page after the target media content is generated. The target media content corresponding to a first song cover picture in the set area is played using the third page. The target media content may be with or without lyrics. The target media content being played may be switched according to a selection operation on the song cover pictures. For the target media content with lyrics, the lyrics are scroll-displayed on the third page. For the target media content without lyrics, a preset copywriting is displayed on the third page.

Exemplarily, a preview window is displayed on the third page, and the preview video of the selected target media content is played in the preview window, where video information of the preview window is associated with the selected target media content, the video information including video content, playing progress, and playing state. For example, the preview video of the target media content currently being played is displayed in the preview window. The preview video may be a video with soundtrack or a beat video. The playing progress of the preview video is consistent with that of the target media content. While the target media content is played on the third page, the preview video of the target media content is also played in the preview window. In this way, the preview video may be watched while listening to a song, which improves the preview efficiency and facilitates quick discrimination on whether the target media content matches the target video.

Optionally, in response to an interactive operation on the preview window, the material preview page is displayed, and a full-screen preview effect of the preview video is displayed using the material preview page.

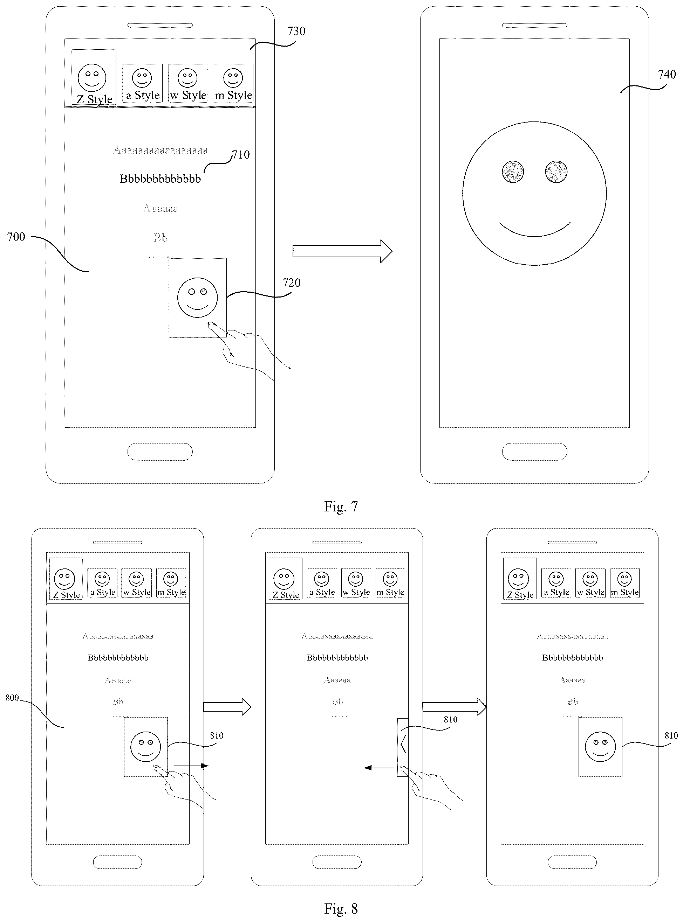

Fig. 7 is a flowchart of a preview method provided by an embodiment of the present disclosure. As shown in Fig. 7, lyrics 710 of the target media content are scroll-displayed on a third page 700. The third page 700 further includes a preview window 720 and a set area 730. The preview window 720 is used to play a preview video of the selected target media content. The set area 730 is used to display a song cover picture of the target media content. The song cover picture of the target media content selected in the set area 730 is in a selected state. In response to an interactive operation on the preview window 720, a material preview page 740 is displayed. The preview video is displayed in full screen on the material preview page 740.

Optionally, in response to an interactive operation on the preview window, the preview window is transformed from a first form to a second form, where the first form represents a preview form of the preview video, and the second form represents a hidden form of the preview video. In response to an interactive operation on the preview window in the second form, the preview window is restored from the second form to the first form.

Fig. 8 is a schematic diagram of a display manner of a preview window provided by an embodiment of the present disclosure. As shown in Fig. 8, a preview window 810 is displayed on a third page 800. If the preview window 810 is slid to the right, the preview window 810 in the first form is gradually reduced in size until reaching a right edge of the third page 800, and is adsorbed to the right edge, presenting the second form of the preview window 810. Then, the preview window 810 in the second form is slid to the left to allow the preview window 810 to be restored from the second form to the first form. Alternatively, the preview window 810 in the second form is clicked to allow the preview window 810 to be restored from the second form to the first form.

Optionally, a publishing control is displayed on the third page or a panoramic preview page of the preview window. In response to an interactive operation on the publishing control, a publishing page is displayed. The publishing page includes an editing control. The editing control is used to trigger an editing event of the lyrics and/or resolution of the target video.

In some embodiments, in response to an interactive operation on the editing control, the material preview page is displayed, where the material preview page includes the lyrics and a song cover picture of the target video. In response to a drag operation on the lyrics, a lyrics order of the target media content may be adjusted. And/or, in response to a resolution adjustment operation on the song cover picture of the target video, the resolution of the target media content may be updated.

In some other embodiments, in response to an interactive operation on the editing control, the material preview page is displayed, where the material preview page includes the lyrics and a thumbnail of the target picture. In response to a drag operation on the lyrics, a lyrics order of the target media content may be adjusted. And/or, in response to a resolution adjustment operation on the thumbnail of the target picture, the resolution of the target media content may be updated.

It should be noted that if the target media content is a pure music video, the target copywriting and the song cover picture of the target video are displayed on the material preview page. Alternatively, if the target media content is a pure music beat video, the target copywriting and the thumbnail of the target picture are displayed on the material preview page.

In response to a confirmation operation on the material preview page, the publishing page is displayed, and the target media content is published by the publishing page.

According to the technical solution of the embodiment of the present disclosure, after the target media content is generated according to the target audio and the target material, the selected target media content and the preview video of the target media content are played on the third page, which optimizes the media content preview manner and improves the preview efficiency.

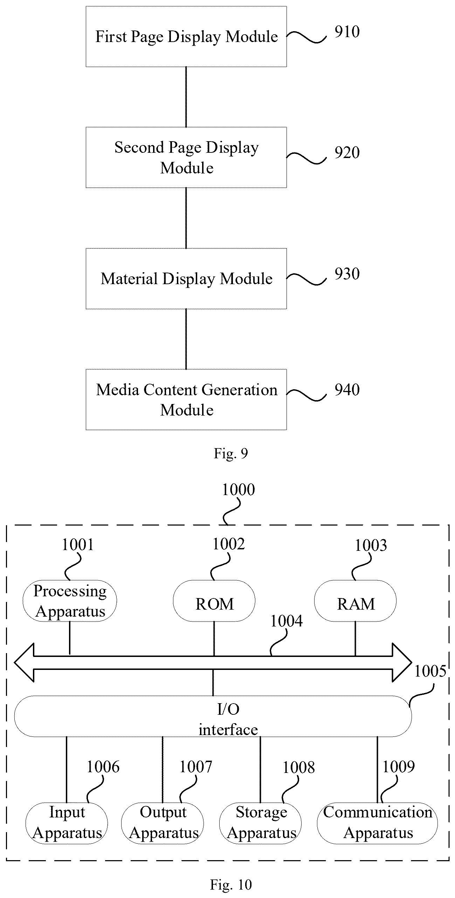

Fig. 9 is a schematic structural diagram of a media content generation apparatus provided by an embodiment of the present disclosure. The apparatus may be implemented in a form of software and/or hardware, optionally, implemented by an electronic device, and the electronic device may be a mobile terminal, a PC, a server, etc. As shown in Fig. 9, the apparatus includes: a first page display module 910, a second page display module 920, a material display module 930, and a media content generation module 940.

The first page display module 910 is configured to display a material import control and a generation control on a first page;
the second page display module 920 is configured to display a second page in response to an interactive operation on the material import control, the second page including a candidate material;
the material display module 930 is configured to determine a target material in response to a selection operation on the candidate material, and display the target material on the first page; and
the media content generation module 940 is configured to generate a target audio according to the target material in response to an interactive operation on the generation control, and generate target media content according to the target audio and the target material.

Optionally, the material display module 930 is further configured to:
display the target material in a target window on the second page in response to the selection operation on the candidate material; and
display the first page in response to a confirmation operation on the target material, and display the target material at a position corresponding to the material import control on the first page.

Optionally, the media content generation module 940 is further configured to:
in response to the interactive operation on the generation control, generate the target audio according to the target material and target prompt information, where the target prompt information includes prompt information associated with media content generation.

Further, generating the target audio according to the target material and the target prompt information includes:
acquiring a target video frame in the target video, and determining image description information according to the target video frame; and
generating the target audio according to the image description information and the target prompt information.

Optionally, the media content generation module 940 is further configured to:
generate the target media content according to the target audio and image information of the target video, where a duration of the target media content is associated with a duration of the target video.

Optionally, the media content generation module 940 is further configured to:
determine a correspondence between the target pictures and the target audio according to beat information and downbeat information of the target audio; and
generate the target media content according to the target audio, the target picture set, and the correspondence.

Optionally, the first page further includes a type option, and option information corresponding to the type option is determined in response to an interactive operation on the type option; and
generating the target audio according to the target material in response to the interactive operation on the generation control includes:
generating the target audio according to the target material and the option information in response to the interactive operation on the generation control, the target audio including a first audio or a second audio, where the first audio includes lyrics, and the second audio does not include lyrics.

Optionally, the apparatus further includes:
a preview module, configured to play, on a third page, selected target media content and a preview video of the target media content after the target media content is generated according to the target audio and the target material.

Further, playing the preview video of the selected target media content on the third page includes:
displaying a preview window on the third page, and playing the preview video of the selected target media content in the preview window, where video information of the preview window is associated with the selected target media content, the video information including video content, playing progress, and playing state.

Optionally, further including:
transforming the preview window from a first form to a second form in response to an interactive operation on the preview window, where the first form represents a preview form of the preview video, and the second form represents a hidden form of the preview video; and
restoring the preview window from the second form to the first form in response to an interactive operation on the preview window in the second form.

The media content generation apparatus provided by the embodiment of the present disclosure may execute the media content generation method provided by any embodiment of the present disclosure, and has function modules and beneficial effects corresponding to the execution of the method.

It is worth noting that the units and modules included in the above apparatus are only divided according to functional logic, but are not limited to the above division, as long as the corresponding functions may be realized; in addition, the specific names of the functional units are only for the convenience of distinguishing from each other, and are not used to limit the protection scope of the embodiments of the present disclosure.

Fig. 10 is a schematic structural diagram of an electronic device provided by an embodiment of the present disclosure. Reference is made to Fig. 10 below, which illustrates a schematic structural diagram of an electronic device 1000 (e.g., a terminal device or a server in Fig. 10) suitable for implementing an embodiment of the present disclosure. The terminal device in the embodiment of the present disclosure may include but not limited to mobile terminals such as a mobile phone, a laptop, a digital broadcast receiver, a PDA (personal digital assistant), a PAD (tablet computer), a PMP (portable multimedia player), a vehicle terminal (e.g., a vehicle navigation terminal), etc., and fixed terminals such as a digital TV, a desktop computer, etc. The electronic device shown in Fig. 10 is only an example, and should not impose any limitation on the function and scope of use of the embodiments of the present disclosure.

As shown in Fig. 10, the electronic device 1000 may include a processing apparatus 1001 (e.g., a central processing unit, a graphics processor, etc.), which may perform various appropriate actions and processes according to a program stored in a read-only memory (ROM) 1002 or a program loaded from a storage apparatus 1008 into a random access memory (RAM) 1003. The RAM 1003 further stores various programs and data required for operations of the electronic device 1000. The processing apparatus 1001, the ROM 1002, and the RAM 1003 are connected to each other through a bus 1004. An editing/output (I/O) interface 1005 is also connected to the bus 1004.

Usually, the following apparatuses may be connected to the I/O interface 1005: an input apparatus 1006 including, for example, a touch screen, a touchpad, a keyboard, a mouse, a camera, a microphone, an accelerometer, a gyroscope, etc.; an output apparatus 1007 including, for example, a liquid crystal display (LCD), a speaker, a vibrator, etc.; a storage apparatus 1008 including, for example, a magnetic tape, a hard disk, etc.; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that not all of the shown apparatuses are required to be implemented or provided. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 1009, or installed from the storage apparatus 1008, or installed from the ROM 1002. When the computer program is executed by the processing apparatus 1001, the above-mentioned functions defined in the method of the embodiment of the present disclosure are executed.

The names of messages or information exchanged between a plurality of apparatuses in the implementations of the present disclosure are only for illustrative purposes, and are not intended to limit the scope of these messages or information.

The electronic device provided by the embodiment of the present disclosure belongs to the same inventive concept as the media content generation method provided by the above embodiment. For technical details not described in detail in this embodiment, reference may be made to the above embodiment, and this embodiment has the same beneficial effects as the above embodiment.

An embodiment of the present disclosure provides a computer storage medium having a computer program stored thereon, where the program implements the media content generation method provided by the above embodiment when being executed by a processor.

It should be noted that the above computer-readable medium in the present disclosure may be a computer-readable signal medium, a computer-readable storage medium, or any combination of the both. The computer-readable storage medium may be, for example, but not limited to, an electrical, magnetic, optical, electromagnetic, infrared or semiconductor system, apparatus or device, or any combination of the above. More specific examples of the computer-readable storage medium may include but not limited to: an electrical connection having one or more conductors, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be used by or in combination with an instruction execution system, apparatus or device. In the present disclosure, the computer-readable signal medium may include a data signal propagated in a baseband or as a part of a carrier wave, and computer-readable program code is carried therein. This propagated data signal may adopt a variety of forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit a program used by or in combination with an instruction execution system, apparatus or device. The program code contained on the computer-readable medium may be transmitted by any suitable medium, including but not limited to: a wire, an optical cable, a RF (radio frequency), etc., or any suitable combination of the above.

In some implementations, a client and a server may communicate using any currently known or future developed network protocol, such as HTTP (HyperText Transfer Protocol), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or may exist alone without being assembled into the electronic device.

The above computer-readable medium carries one or more programs, and when the one or more programs are executed by the electronic device, the electronic device is caused to:
display a material import control and a generation control on a first page;
display a second page in response to an interactive operation on the material import control, the second page including a candidate material;
determine a target material in response to a selection operation on the candidate material, and display the target material on the first page, where the target material includes a target picture set and/or a target video; and
generate a target audio according to the target material in response to an interactive operation on the generation control, and generate target media content according to the target audio and the target material.

Computer program code for performing operations of the present disclosure may be written in one or more programming languages or a combination thereof, where the programming languages include but not limited to object-oriented programming languages such as Java, Smalltalk, and C++, and further include conventional procedural programming languages such as "C" language or similar programming languages. The program code may be completely executed on a user computer, partially executed on a user computer, executed as an independent software package, partially executed on a user computer and partially executed on a remote computer, or completely executed on a remote computer or a server. In the case involving a remote computer, the remote computer may be connected to the user computer through any kind of network, including a local area network (LAN) or a wide area network (WAN), or it may be connected to an external computer (for example, connected by using Internet provided by an Internet service provider).

The flowcharts and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The involved units described in the embodiments of the present disclosure may be implemented by software or hardware. Among them, the name of a unit does not constitute a limitation on the unit itself under certain circumstances.

The functions described above may be performed at least partially by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logical device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include but not limited to an electronic, magnetic, optical, electromagnetic, infrared, or semiconductor system, apparatus or device, or any suitable combination of the above. More specific examples of the machine-readable storage medium may include an electrical connection based on one or more conductors, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The above description is only preferred embodiments of the present disclosure and an explanation of the applied technical principles. Those skilled in the art should understand that the disclosure scope involved in the present disclosure is not limited to the technical solution formed by the specific combination of the above technical features, and should also cover other technical solutions formed by any combination of the above technical features or their equivalent features without departing from the above disclosure concept. For example, the above features and the technical features disclosed in the present disclosure (but not limited to) with similar functions are replaced each other to form a technical solution.

Additionally, although operations are depicted in a particular order, this should not be understood as requiring that such operations are performed in the particular order shown or in sequential order. Under certain circumstances, multitasking and parallel processing may be beneficial. Likewise, although several specific implementation details are included in the above discussion, these should not be construed as limiting the scope of the present disclosure. Certain features described in the context of separate embodiments may also be implemented in a single embodiment in combination. Conversely, various features described in the context of a single embodiment may also be implemented in a plurality of embodiments individually or in any suitable sub combination.

Although the subject matter has been described in language specific to structural features and/or logical actions of the method, it should be understood that the subject matter defined in the appended claims is not necessarily limited to the specific features or actions described above. Conversely, the specific features and actions described above are only exemplary forms of implementing the claims.

## Claims

1. A media content generation method, comprising:
displaying a material import control and a generation control on a first page;
displaying a second page in response to an interactive operation on the material import control, the second page comprising a candidate material;
determining a target material in response to a selection operation on the candidate material, and displaying the target material on the first page, wherein the target material comprises at least one of a target picture set and a target video; and
generating a target audio according to the target material in response to an interactive operation on the generation control, and generating target media content according to the target audio and the target material.

2. The method of claim 1, wherein determining the target material in response to the selection operation on the candidate material, and displaying the target material on the first page comprises:
displaying the target material in a target window on the second page in response to the selection operation on the candidate material; and
displaying the first page in response to a confirmation operation on the target material, and displaying the target material at a position corresponding to the material import control on the first page.

3. The method of claim 1, wherein generating the target audio according to the target material in response to the interactive operation on the generation control comprises:
generating the target audio according to the target material and target prompt information in response to the interactive operation on the generation control, wherein the target prompt information comprises prompt information associated with media content generation.

4. The method of claim 3, wherein generating the target audio according to the target material and the target prompt information comprises:
acquiring a target video frame in the target video, and determining image description information according to the target video frame; and
generating the target audio according to the image description information and the target prompt information.

5. The method of claim 1, wherein generating the target media content according to the target audio and the target material comprises:
generating the target media content according to the target audio and image information of the target video, wherein a duration of the target media content is associated with a duration of the target video.

6. The method of claim 1, wherein generating the target media content according to the target audio and the target material comprises:
determining a correspondence between the target pictures and the target audio according to beat information and downbeat information of the target audio; and
generating the target media content according to the target audio, the target picture set, and the correspondence.

7. The method of any one of claims 1 to 6, wherein the first page further comprises a type option, and option information corresponding to the type option is determined in response to an interactive operation on the type option; and
wherein generating the target audio according to the target material in response to the interactive operation on the generation control comprises:
generating the target audio according to the target material and the option information in response to the interactive operation on the generation control, the target audio comprising a first audio or a second audio, wherein the first audio comprises lyrics, and the second audio does not comprise lyrics.

8. The method of claim 1, wherein after the target media content is generated according to the target audio and the target material, the method further comprises:
playing selected target media content and a preview video of the target media content on a third page.

9. The method of claim 8, wherein playing the preview video of the selected target media content on the third page comprises:
displaying a preview window on the third page, and playing the preview video of the selected target media content in the preview window, wherein video information of the preview window is associated with the selected target media content, the video information comprising video content, playing progress, and playing state.

10. The method of claim 9, further comprising:
transforming the preview window from a first form to a second form in response to an interactive operation on the preview window, wherein the first form represents a preview form of the preview video, and the second form represents a hidden form of the preview video; and
restoring the preview window from the second form to the first form in response to an interactive operation on the preview window in the second form.

11. An electronic device, comprising:
at least a processor; and
a non-transitory memory with instructions thereon,
wherein the instructions upon execution by the processor, cause the processor to implement the media content generation method of any one of claims 1 to 10.

12. A non- transitory computer-readable storage medium storing instructions that cause at least a processor to perform the media content generation method of any one of claims 1 to 10.

13. A computer program product, comprising a computer program, wherein the computer program implements the media content generation method of any one of claims 1 to 10 when being executed by a processor.
